# EUROPEAN PATENT SPECIFICATION

(11) **EP 4 524 631 B1**
(45) Date of publication and mention of the grant of the patent: **07.10.2026**
(21) Application number: 23904769.9
(22) Date of filing: 30.10.2023
(51) Int. Cl.: G02B 6/44

(54) **UNIDIRECTIONALLY STRANDED MICROBUNDLE OPTICAL CABLE**
UNIDIREKTIONAL VERSEILTES OPTISCHES MIKROBÜNDELKABEL
CÂBLE OPTIQUE À MICROFAISCEAU TORONNÉ DE MANIÈRE UNIDIRECTIONNELLE

(30) Priority: 18.07.2023 CN 202310878616
(43) Date of publication of application: 19.03.2025
(73) Proprietor: Jiangsu Zhongtian Technology Co., Ltd., Nantong, Jiangsu 226000 (CN)
(72) Inventor: CAI, Wei, Nantong, Jiangsu 226000 (CN); MIAO, Xiaoming, Nantong, Jiangsu 226000 (CN); ZHOU, Juan, Nantong, Jiangsu 226000 (CN); QIAN, Huihui, Nantong, Jiangsu 226000 (CN); LIU, Liang, Nantong, Jiangsu 226000 (CN); ZHU, Pengyu, Nantong, Jiangsu 226000 (CN)
(74) Representative: J A Kemp LLP
(86) International application number: PCT/CN2023/127930
(87) International publication number: WO 2025/015751

(56) References cited:
- CN-A- 110 426 803
- CN-A- 111 190 257
- CN-A- 111 580 233
- CN-A- 112 269 231
- CN-A- 115 524 818
- CN-A- 116 609 906
- JP-A- 2003 207 699
- JP-A- S6 366 517
- US-A- 5 125 063
- ANDREEV VLADIMIR A ET AL: "Statistical characteristics of excess fiber length in loose tubes of optical cable", PROCEEDINGS OF SPIE; [PROCEEDINGS OF SPIE ISSN 0277-786X VOLUME 10524], SPIE, US, vol. 10342, 6 April 2017 (2017-04-06), pages 103421G - 103421G, XP060085781, ISBN: 978-1-5106-1533-5, DOI: 10.1117/12.2270860
- AMIRI H ET AL: "Optimization of manufacturing parameters of optical fiber cables", ADVANCED OPTOELECTRONICS AND LASERS, 2005. PROCEEDINGS OF CAOL 2005. S ECOND INTERNATIONAL CONFERENCE ON YALTA, CRIMEA, UKRAINE 12-17 SEPT., 2005, PISCATAWAY, NJ, USA,IEEE, vol. 2, 12 September 2005 (2005-09-12), pages 253 - 256, XP010866553, ISBN: 978-0-7803-9130-7, DOI: 10.1109/CAOL.2005.1553969

## Description

### TECHNICAL FIELD

The present invention relates to the technical field of optical cables, and in particular to a unidirectional stranded micro-bundle optical cable.

### BACKGROUND

Micro-bundle optical cables are generally used in urban backbone networks, and are usually laid in outdoor pipelines or overhead. Therefore, there are special requirements for tensile properties of optical cables. The stress on the tensile elements in optical cables is very important, and thus the stranding mode of the reinforcing element and the micro-bundle tube within optical cables is studied. The main structure of the micro-bundle optical cable includes a micro-bundle tube, a reinforcing element (a fiber rod or other metal reinforcing element including not only those contained in the sheath, but also those embedded in the sheath), and an outer sheath, where the micro-bundle tube contains at least one optical fiber, and the sheath is embedded with at least one reinforcing element; and a yarn-like reinforcing element is arranged between the micro-bundle tube and the sheath. In general, the water-blocking material inside the micro-bundle tube is filled with an ointment and a water-blocking yarn, and the ointment contains at least one kind of liquid and one kind of thickening agent, where the liquid is silicone oil, fluorinated oil or a mixture thereof, the thickening agent is silica, bentonite, polytetrafluoroethylene or a mixture thereof, and the water-blocking yarn is of cotton yarn type.

ANDREEV VLADIMIR A ET AL: "Statistical characteristics of excess fiber length in loose tubes of optical cable",PROCEEDINGS OF SPIE; [PROCEEDINGS OF SPIE ISSN 0277-786X VOLUME 10524], SPIE, US, vol. 10342, 6 April 2017, describes a unidirectional stranded micro-bundle optical cable.

The existing strand of the reinforcing elements and the optical units has the following problems.
1. The reinforcing element is not subjected to uniform force, and only part of elements is stressed during stretching process.
2. The micro-bundle tube cannot guarantee a consistent forced direction after being sheathed, and there is an excessive attenuation phenomenon.
3. Excess length of the optical unit is easy to be consumed, resulting in that the first to be stressed is the micro-beam tube.
4. In the existing technology, a plurality of micro-bundle tubes and reinforcing element are generally directly placed straight, and the first to be stressed is the optical fiber inside the micro-bundle tube, making it impossible to ensure the tensile properties of the optical cables.

In view of the above, the present invention is proposed.

### SUMMARY

One of objects of the present invention is to provide a unidirectional stranded micro-bundle optical cable to alleviate at least one of the above-mentioned problems in the prior art.

In order to solve the technical problems described above, the present invention adopts the following technical solutions.

A first aspect of the present invention provides a unidirectional stranded micro-bundle optical cable, which includes micro-bundle tubes, a reinforcing layer, a water-blocking tape and an outer sheath;
a first water-blocking yarn is arranged between the micro-bundle tubes, a tearing rope is arranged in the water-blocking tape, and a reinforcing member is arranged in the outer sheath;
the micro-bundle tube adopts a spiral stranding with a stranding mode of unidirectional stranding and a stranding pitch of 800mm to 900mm;
the stranding pitch of the micro-bundle tube is greater than an excess length for the unidirectional stranding;
the excess length for the unidirectional stranding is calculated by the following formula: ${ε}_{fiber} = \left\{1-\frac{\sqrt{{\left[\left(d+2δ+1.16\times \sqrt{n}\times {d}_{f}\right)\times π\right]}^{2} + {h}^{2}}}{\sqrt{{\left[\left(D+d\right)\times π\right]}^{2} + {h}^{2}}}\right\} \times 100 % + 0.6 % - \frac{σ}{h} \times 100 %$
where, d is a diameter of the reinforcing member; D is an outer diameter of the micro-bundle tube; δ is a wall thickness of the micro-bundle tube; n is number of core of optical fiber in the micro-bundle tube; d_{f} is an outer diameter of the optical fiber; h is a stranding pitch; σ is a tensile strength of material of the micro-bundle tube; 0.6% is an additional stretching window formed by the unidirectional stranding;
the reinforcing layer adopts a spiral stranding with a stranding mode of unidirectional stranding and a stranding pitch of 600mm to 800mm; and
a stranding direction of the micro-bundle tube is opposite to a stranding direction of the reinforcing layer.

Further, a material of the reinforcing layer is at least one of aramid, fiberglass yarn, polyester yarn and water-blocking yarn.

Further, a material of the outer sheath is a polyolefin material.

The polyolefin material includes a polyethylene material and/or a low smoke zero halogen flame-retardant polyolefin material.

Further, the micro-bundle tubes include an optical fiber, a second water-blocking yarn and a micro-bundle tube sheath.

The number of the optical fiber is ≥1, and the optical fiber adopts an S-Z stranding.

A dimension of the optical fiber includes a nominal diameter of 250µm, a nominal diameter of 200µm, or a nominal diameter of 180µm.

Further, the second water-blocking yarn has a yarn density of ≥ 20000m/kg, a tensile strength of ≥ 15N, an elongation at break of ≥ 15%, a thermal shrinkage rate of ≤ 2.5%, an expansion velocity of ≥ 30ml/g/min, an expansion rate of ≥ 40ml/g, and a moisture content of ≤ 5%.

Further, the micro-bundle tubes include an optical fiber, a water-blocking fiber ointment and a micro-bundle tube sheath.

The water-blocking fiber ointment has a density of ≤ 0.88g/cm³, an oxidative induction time of ≥ 20min, a dropping point of ≥ 200°C, water resistance of not disintegrating for 7 days, a moisture content of ≤ 3%, and a hydrogen evolution amount of ≤ 0.03µl/g.

Further, the micro-bundle tube sheath has a wall thickness of 0.1mm to 0.2mm.

A material of the micro-bundle tube sheath is LSZH (low smoke zero halogen), TPEE (thermoplastic polyester elastomer) or a polyolefin material.

The micro-bundle tube sheath has a density of 1.05g/cm³ - 1.55g/cm³, a tensile strength of 12MPa - 18MPa, and an elongation at break of 120% - 550%.

Compared with the prior art, the present invention at least has the following beneficial effects.

In the unidirectional stranded micro-bundle optical cable provided in the present invention, the micro-bundle tubes are unidirectionally stranded, which ensures a consistent forced direction of the optical fiber inside the micro-bundle tubes and at the same time reduces excessive consumption of the excess length in the micro-bundle tube so as to effectively control the excess length of the optical fiber inside the micro-bundle tubes to be 0.2‰ to 0.8‰ and to ensure the existence of effective positive excess length inside the tube. Furthermore, the reinforcing layer is unidirectionally stranded, which ensures that after the optical cable is stressed, the reinforcing layer is first subjected to force, ensuring that the optical fiber is not prioritized to be subjected to force. At the same time, the unidirectional stranding of the reinforcing layer can better cover the micro-bundle tubes and avoid affecting the attenuation due to adhesion between the micro-bundle tubes and the outer sheath. Both the micro-bundle tubes and the reinforcing layer adopt unidirectional stranding and their stranding directions are opposite to each other, which ensures that the micro-bundle tubes are fully wrapped by the reinforcing layer and are rounded, ensuring the roundness of the optical cable as a whole.

In the manufacturing process, not part of the claimed invention, the pay-off tension is controlled in a range of 0.8N - 1.2N since the micro-bundle tubes have a small outer diameter and are soft in material; the angle of the micro-bundle tubes into a mouth of a stranding die is set in the range of 20° - 30°, which ensures that a scraping force between the micro-bundle tubes and the stranding die is minimized when the micro-bundle tubes enter the stranding die, so as to ensure that the optical fibers inside the tubes are not subjected to a squeezing force; the pay-off tension of the reinforcing layer is in a range of 4N - 5N, which ensures that the reinforcing layer is first subjected to force; and the reinforcing layer is evenly arranged on a stranding cage of the reinforcing layer, which ensures that the reinforcing layer is evenly wrapped on the micro-bundle tubes. The angle of the reinforcing layer into the mouth of the stranding die is kept in a range of 20° - 30°, which avoids abrasion between the reinforcing layer and the stranding die, reduces the strength of the reinforcing layer, and ensures that the cable core is well-shaped after exiting the mouth without looseness phenomenon. In addition, a stranding cage of the micro-bundle tubes and the stranding cage of the reinforcing layer should be set to have opposite stranding directions so as to avoid the phenomenon of die blockage and uneven stranding when entering the stranding die of the reinforcing layer.

### BRIEF DESCRIPTION OF DRAWINGS

In order to provide a clearer explanation of specific embodiments of the present invention or the technical solutions in the prior art, a brief introduction will be given below to the drawings required in the description of the specific embodiments or the prior art. It is obvious that the drawings in the following description are some embodiments of the present invention. For a person skilled in the art, other drawings can be obtained based on these drawings without creative labor.
FIG. 1 is a structural schematic diagram of a unidirectional stranded micro-bundle optical cable provided in Embodiment 1 of the present invention.
FIG. 2 is a structural schematic diagram of a micro-bundle tube provided in Embodiment 1 of the present invention.
FIG. 3 is a structural schematic diagram of another micro-bundle tube provided in Embodiment 1 of the present invention.
FIG. 4 is a structural schematic diagram of a unidirectional stranded micro-bundle optical cable provided in Embodiment 2 of the present invention.
FIG. 5 is a structural schematic diagram of a micro-bundle tube provided in Embodiment 2 of the present invention.

Reference signs: 10 - micro-bundle tube; 101 - optical fiber; 102 - second water-blocking yarn; 103 - micro-bundle tube sheath; 104 - water-blocking fiber ointment; 11 - first water-blocking yarn; 20 - reinforcing layer; 30 - water-blocking tape; 31 - tearing rope; 40 - outer sheath; 41 - reinforcing member.

### DESCRIPTION OF EMBODIMENTS

In order to make the purpose, technical solutions, and advantages of the present invention clearer, the following will provide a clear and complete description of the technical solutions of the present invention with reference to the embodiments of the present invention. It is evident that the described embodiments are some of the embodiments of the present invention, not all of them. The components of the embodiments of the present invention may be arranged and designed in various different configurations.

It should be noted that relational terms herein such as first and second are only used to distinguish one entity or operation from another entity or operation, and do not necessarily require or imply any actual relationship or order existing between these entities or operations. In addition, the term "include", "contain" or any other variations thereof are intended to cover non-exclusive inclusions such that a process, method, object, or device comprising a set of elements includes not only these elements, but also includes other elements not expressly listed, or elements inherent to the process, method, object or device.

A first aspect of the present invention provides a unidirectional stranded micro-bundle optical cable, which includes micro-bundle tubes, a reinforcing layer, a water-blocking tape and an outer sheath;
a first water-blocking yarn is arranged between the micro-bundle tubes, a tearing rope is arranged in the water-blocking tape, and a reinforcing member is arranged in the outer sheath.

The water-blocking principle of the first water-blocking yarn is that when the fiber body of the first water-blocking yarn encounters water, it may expand rapidly to form a gelatinous substance with a large volume, the gelatinous substance has a strong water retention capacity, which can effectively prevent the growth of water body and thus prevent water from continuing to penetrate and diffuse, thereby achieving the purpose of blocking water.

Tearing rope is also called PP tying rope and PP tearing film. The material of the tearing rope generally is a polypropylene drawing-grade resin due to its good plasticity, strong tensile strength at break and excellent tensile impact performance. The tearing film is formed by polypropylene via blowing and stretching, and has strong tensile strength, soft texture, non-toxic, odorless, pollution-free, beautiful appearance and bright color. The tearing rope in the unidirectional stranded micro-bundle optical cable has an anti-pulling effect, and is also able to absorb the heat emitted by the cable during use, and may prevent the cable rubber sheath from adhering to each other.

The micro-bundle tube adopts a spiral stranding with a stranding mode of unidirectional stranding and a stranding pitch of 800mm to 900mm. The stranding pitch of the micro-bundle tube is greater than an excess length for the unidirectional stranding, and such pitch ensures that the excess length inside the tube is not consumed, ensuring that the tube instead of optical fiber is first subjected to force after the optical cable is stressed. The unidirectional stranding ensures that a forced direction of the optical fiber inside the tube is consistent and reduces the attenuation of the optical fiber. In some embodiments of the present invention, the stranding pitch of the micro-bundle tube is typically but not limited to 800mm, 820mm, 840mm, 860mm, 880mm or 900mm.

The excess length for the unidirectional stranding is calculated by the formula: ${ε}_{fiber} = \left\{1-\frac{\sqrt{{\left[\left(d+2δ+1.16\times \sqrt{n}\times {d}_{f}\right)\times π\right]}^{2} + {h}^{2}}}{\sqrt{{\left[\left(D+d\right)\times π\right]}^{2} + {h}^{2}}}\right\} \times 100 % + 0.6 % - \frac{σ}{h} \times 100 %$ where, d is a diameter of the reinforcing member; D is an outer diameter of the micro-bundle tube; δ is a wall thickness of the micro-bundle tube; n is number of core of optical fiber in the micro-bundle tube; d_{f} is an outer diameter of the optical fiber; h is a stranding pitch; σ is a tensile strength of material of the micro-bundle tube; 0.6% is an additional stretching window formed by the unidirectional stranding.

The reinforcing layer adopts a spiral stranding with a stranding mode of unidirectional stranding and a stranding pitch of 600mm to 800mm. Under this stranding pitch, the stress on the reinforcing layer is the largest. In some embodiments of the present invention, the stranding pitch of the reinforcing layer is typically but not limited to 600mm, 620mm, 640mm, 660mm, 680mm, 700mm, 720mm, 740mm, 760mm, 780mm or 800mm.

The stranding direction of the micro-bundle tube is opposite to the stranding direction of the reinforcing layer, so as to avoid die blockage and uneven stranding when tightening the stranding die of the reinforcing layer. The stranding pitch of the micro-bundle tube and the stranding pitch of the reinforcing layer mentioned above are uniform.

In the unidirectional stranded micro-bundle optical cable provided in the present invention, the micro-bundle tubes is unidirectionally stranded to ensure that a forced direction of the optical fiber inside the micro-bundle tube is consistent and to reduce excessive consumption of the excess length in the micro-bundle tube at the same time, with an effective control of the excess length of the optical fiber inside the micro-bundle tube at 0.2‰ to 0.8‰, ensuring the existence of effective positive excess length inside the tube. The reinforcing layer is also unidirectionally stranded to ensure that after the optical cable is stressed, the reinforcing layer is first subjected to force, ensuring that the optical fiber is not prioritized to be subjected to force. At the same time, the unidirectional stranding of the reinforcing layer can better cover the micro-bundle tube, and avoid attenuation due to adhesion between the micro-bundle tube and the outer sheath. Both the micro-bundle tube and the reinforcing layer adopt unidirectional stranding and have opposite stranding directions, which may ensure that the micro-bundle tubes are fully wrapped by the reinforcing layer and are rounded, ensuring the roundness of the optical cable as a whole.

Further, a material of the reinforcing layer is at least one of aramid, fiberglass yarn, polyester yarn and water-blocking yarn.

Further, a material of the outer sheath is a polyolefin material.

The polyolefin material includes a polyethylene material and/or a low smoke zero halogen flame-retardant polyolefin material.

Further, the micro-bundle tube includes an optical fiber, a second water-blocking yarn and a micro-bundle tube sheath.

The number of the optical fiber is ≥1, and the optical fiber adopts an S-Z stranding.

A dimension of the optical fiber includes a nominal diameter of 250µm, a nominal diameter of 200µm, or a nominal diameter of 180µm.

A dimension of the micro-bundle tube includes a nominal diameter of 0.9mm, a nominal diameter of 0.95mm, a nominal diameter of 1.1mm or a nominal diameter of 1.35mm.

Further, the second water-blocking yarn has a yarn density of ≥ 20000m/kg, a tensile strength of ≥ 15N, an elongation at break of ≥ 15%, a thermal shrinkage rate of ≤ 2.5%, an expansion velocity of ≥ 30ml/g/min, an expansion rate of ≥ 40ml/g, and a moisture content of ≤ 5%.

Further, the micro-bundle tube includes an optical fiber, a water-blocking fiber ointment and a micro-bundle tube sheath.

The water-blocking fiber ointment has a density of ≤ 0.88g/cm³, an oxidative induction time of ≥ 20min, a dropping point of ≥ 200°C, water resistance of not disintegrating for 7 days, a moisture content of ≤ 3%, and a hydrogen evolution amount of ≤ 0.03µl/g.

Further, the micro-bundle tube sheath has a wall thickness of 0.1mm to 0.2mm.

In some embodiments of the present invention, the wall thickness of the micro-bundle tube sheath is typically, but not limited to 0.1mm, 0.11mm, 0.12mm, 0.13mm, 0.14mm, 0.15mm, 0.16mm, 0.17mm, 0.18mm , 0.19mm or 0.2mm.

A material of the micro-bundle tube sheath is LSZH (low smoke zero halogen), TPEE (thermoplastic polyester elastomer) or polyolefin material.

Low smoke zero halogen, abbreviated as LSZH, refers to a material that does not contain halogen (F, Cl, Br, I and At) or environmental substance such as lead, cadmium, chromium, mercury, etc., and is a material classification for wire sheath in the wire and cable industry. Low smoke zero halogen wire sheath is formed by a thermoplastic or thermosetting material that has low smoke emission when being heated and contain no halogen itself.

Thermoplastic polyester elastomer, abbreviated as TPEE, is a linear block copolymer containing PBT (polybutylene terephthalate) polyester hard segment and aliphatic polyester or polyether soft segment. TPEE has both excellent elasticity of rubber and easy processing of thermoplastics, and may be used for adjustment of hardness of the micro-bundle tube sheath and giving freedom of design.

In some embodiments of the present invention, an outer diameter of 1-2-core micro-bundle tube is 0.9±0.05mm, the outer diameter of 4-core micro-bundle tube is 0.95±0.05mm, the outer diameter of 6-core micro-bundle tube is 1.1±0.05mm, and the outer diameter of 12-core micro-bundle tube is 1.35±0.1mm. An inner diameter of the micro-bundle tube sheath is determined according to the outer diameters of the above-mentioned micro-bundle tubes.

The micro-bundle tube sheath has a density of 1.05g/cm³ - 1.55g/cm³, a tensile strength of 12MPa - 18MPa, and an elongation at break of 120% - 550%.

A second aspect of the present disclosure, not part of the claimed invention, provides a manufacturing process of a unidirectional stranded micro-bundle optical cable, including: firstly paying off micro-bundle tubes with a pay-off tension of 0.8N - 1.2N, where an angle of the micro-bundle tubes into a mouth of a stranding die is set in a range of 20° - 30°; then paying off a reinforcing layer with a pay-off tension of 4N - 5N, where an angle of the reinforcing layer into the mouth of the stranding die is set in a range of 20° - 30°; and finally, extruding, cooling and winding up to obtain the unidirectional stranded micro-bundle optical cable.

In the manufacturing process, since the micro-bundle tubes have a small outer diameter and are soft in material, the pay-off tension is controlled in a range of 0.8N to 1.2N; the angle of the micro-bundle tubes into the mouth of the stranding die is set between 20° and 30°, which ensures that a scraping force between the micro-bundle tubes and the stranding die is minimized when the micro-bundle tubes enter the stranding die, so as to ensure that the optical fibers inside the tubes are not subjected to a squeezing force. The pay-off tension of the reinforcing layer is between 4N and 5N, which ensures that the reinforcing layer is first subjected to force. The reinforcing layer is evenly arranged on a stranding cage of the reinforcing layer, which ensures that the reinforcing layer is evenly wrapped on the micro-bundle tubes. The angle of the reinforcing layer into the mouth of the stranding die is kept between 20° and 30°, which avoids abrasion between the reinforcing layer and the stranding die, reduces the strength of the reinforcing layer, and ensures that the cable core is well-shaped after exiting the mouth of the die without looseness phenomenon. In addition, a stranding cage of the micro-bundle tubes and the stranding cage of the reinforcing layer should be set to have opposite stranding directions so as to avoid die blockage and uneven stranding when tightening the stranding die of the reinforcing layer.

In some embodiments, a unidirectional stranding die for the optical unit into the mouth of the stranding die adopts an exit of the die which is 0.3mm to 0.4mm larger than the size of the cable core.

In some embodiments, when the reinforcing layer enters the mouth of the stranding die, the size of the mouth of the stranding die is 0.1mm to 0.2mm larger than the size of the entire cable, so as to ensure that the cable core is well-shaped after exiting the mouth, without looseness phenomenon.

Further, a temperature of the mouth for the extruding is 180°C, and a temperature of other part of the machine body is 170°C - 190°C.

Further, the cooling includes a first cooling and a second cooling.

The first cooling has a temperature of 40°C - 50°C, and the second cooling has a temperature of 20°C - 30°C.

A tension of the winding up is 30N - 50N.

Some implementations of the present invention will be described in detail below with reference to embodiments. The following embodiments and the features in the embodiments may be combined with each other without conflict. The raw materials in the embodiments and comparative embodiments are commercially available unless otherwise specified.

### Embodiment 1

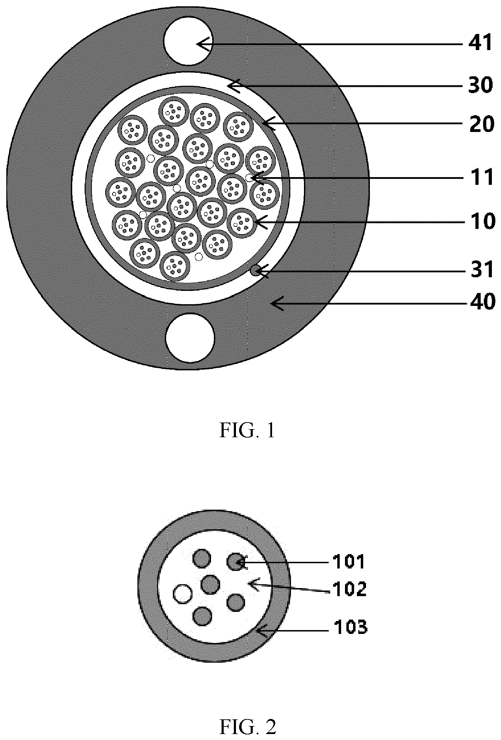

The present embodiment provides a unidirectional stranded micro-bundle optical cable, whose structure is shown in FIG. 1, including micro-bundle tubes 10, a reinforcing layer 20, a water-blocking tape 30 and an outer sheath 40;
a first water-blocking yarn 11 is arranged between the micro-bundle tubes 10, a tearing rope 31 is arranged in the water-blocking tape 30, and a reinforcing member 41 is arranged in the outer sheath 40;
the micro-bundle tubes 10 adopt a spiral stranding with a stranding mode of unidirectional stranding; the reinforcing layer 20 adopts a spiral stranding with a sranding mode of unidirectional stranding; a stranding direction of the micro-bundle tube 10 is opposite to a stranding direction of the reinforcing layer 20.

In one implementation of the present embodiment, a material of the reinforcing layer 20 is at least one of aramid, fiberglass yarn, polyester yarn and water-blocking yarn.

In some implementations of the present embodiment, a material of the outer sheath 40 is a polyolefin material, preferably a polyethylene material or a low smoke zero halogen flame-retardant polyolefin material.

In some implementations of the present embodiment, the micro-bundle tube 10 includes an optical fiber 101, a second water-blocking yarn 102 and a micro-bundle tube sheath 103, as shown in FIG. 2. In some implementations of the present embodiment, the optical fiber 101 is a single-mode optical fiber.

In some implementations of the present embodiment, a dimension of the optical fiber 101 may be a nominal diameter of 250µm, a nominal diameter of 200µm, or a nominal diameter of 180µm.

In some implementations of the present embodiment, the number of the optical fiber 101 within the micro-bundle tube 10 is greater than 1. The optical fibers 101 are distinguished by coloring, and the stranding mode of the optical fibers 101 in the micro-bundle tube 10 is unidirectional stranding. In some implementations of the present embodiment, the number of the second water-blocking yarn 102 is ≥ 1, and the second water-blocking yarn has a yarn density of ≥ 20000m/kg, a tensile strength of ≥ 15N, an elongation at break of ≥ 15%, a thermal shrinkage rate of ≤ 2.5%, an expansion velocity of ≥ 30ml/g/min, an expansion rate of ≥ 40ml/g, and a moisture content of ≤ 5%.

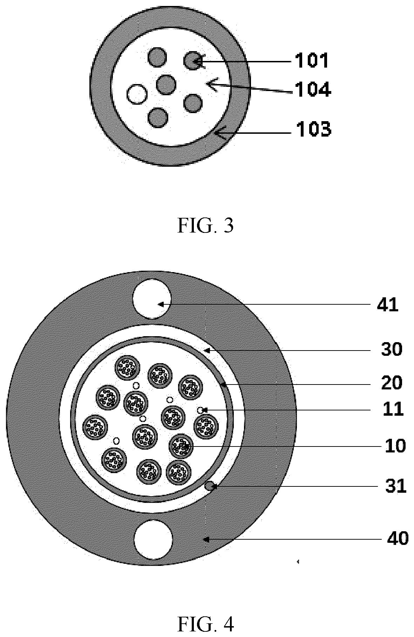

In other implementations of the present embodiment, the micro-bundle tube 10 includes an optical fiber 101, a water-blocking fiber ointment 104 and a micro-bundle tube sheath 103, as shown in FIG. 3.

In other implementations of the present embodiment, the water-blocking fiber ointment is used to replace the second water-blocking yarn 102. The water-blocking fiber ointment has a density of ≤ 0.88g/cm³, an oxidative induction time of ≥ 20min, a dropping point of ≥ 200°C, water resistance of not disintegrating for 7 days, a moisture content of ≤ 3%, and a hydrogen evolution amount of ≤ 0.03µl/g.

In some implementations of the present embodiment, the micro-bundle tube sheath 103 has a wall thickness of 0.1mm - 0.2mm. A material of the micro-bundle tube sheath 103 is LSZH, TPEE or other polyolefin materials. The micro-bundle tube sheath 103 has a density of 1.05g/cm³ - 1.55g/cm³, a tensile strength of 12MPa - 18MPa, and an elongation at break of 120% - 550%.

In some implementations of the present embodiment, the optical fiber 101 adopts an S-Z stranding.

### Embodiment 2

The present embodiment provides a unidirectional stranded micro-bundle optical cable with 144 optical fiber cores, as shown in FIG. 4, including micro-bundle tubes 10, a reinforcing layer 20, a water-blocking tape 30 and an outer sheath 40;
a first water-blocking yarn 11 is arranged between the micro-bundle tubes 10, a tearing rope 31 is arranged in the water-blocking tape 30, and a reinforcing member 41 is arranged in the outer sheath 40;
the micro-bundle tube 10 adopts a spiral stranding with a stranding mode of unidirectional stranding; the reinforcing layer 20 adopts a spiral stranding with a stranding mode of unidirectional stranding; a stranding direction of the micro-bundle tube 10 is opposite to a stranding direction of the reinforcing layer 20.

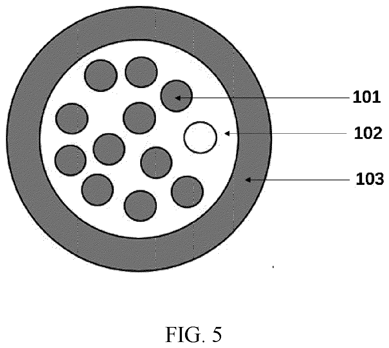

There are 12 optical fibers in each micro-bundle tube 10, as shown in FIG. 5. The micro-bundle tube 10 includes an optical fiber 101, a second water-blocking yarn 102 and a micro-bundle tube sheath 103.

The color of the optical fibers are blue, orange, green, brown, gray, white, red, black, yellow, purple, pink, and turquoise. The optical fibers are G.652D optical fibers. The colored optical fiber coatings have a diameter of 245µm±15µm. The optical fibers are in a stranded state inside the micro-bundle tube 10, and are S-Z stranded.

Each micro-bundle tube 10 includes one 200D water-blocking yarn and the water-blocking yarn has a density of 20000m/kg.

The micro-bundle tube sheath 103 has a wall thickness of 0.15mm, and the micro-bundle tube sheath is a TPEE material with a density of 1.1g/cm³, a tensile strength of 15MPa, and an elongation at break of 320%.

An outer diameter of the 12-core micro-bundle tube is 1.35±0.05mm.

The micro-bundle tubes 10 adopt a spiral unidirectional stranding in an inner cavity of the sheath.

The colors of the micro-bundle tubes 10 are blue, orange, green, brown, gray, white, red, black, yellow, purple, pink, and turquoise.

A material of the reinforcing layer 20 is aramid and water-blocking yarn.

Two FRP reinforcing members are embedded in parallel into the outer sheath 40, and the reinforcing member is 1.6±0.1mm in size.

A material of the outer sheath 40 is a high-density polyethylene material, and a wall thickness of the sheath is nominally 2.6mm.

The outer diameter of the 144-core fully-dry micro-bundle optical cable as a whole is nominally 12.0mm.

Finally, it should be noted that the above embodiments are only used to illustrate the technical solutions of the present invention, but not to limit them; although the present invention has been described in detail with reference to the foregoing embodiments, the scope of the invention is limited by the appended claims.

## Claims

1. A unidirectional stranded micro-bundle optical cable, comprising micro-bundle tubes (10), a reinforcing layer (20), a water-blocking tape (30) and an outer sheath (40);
a first water-blocking yarn (11) is arranged between the micro-bundle tubes (10), a tearing rope (31) is arranged in the water-blocking tape (30), and a reinforcing member (41) is arranged in the outer sheath (40);
the micro-bundle tube (10) adopts a spiral stranding with a stranding mode of unidirectional stranding, **characterized in that** the spiral stranding has a stranding pitch of 800mm - 900mm;
the stranding pitch of the micro-bundle tube (10) is greater than an excess length for the unidirectional stranding;
the excess length for the unidirectional stranding is calculated by the following formula: ${ε}_{fiber} = \left\{1-\frac{\sqrt{{\left[\left(d+2δ+1.16\times \sqrt{n}\times {d}_{f}\right)\times π\right]}^{2} + {h}^{2}}}{\sqrt{{\left[\left(D+d\right)\times π\right]}^{2} + {h}^{2}}}\right\} \times 100 % + 0.6 % - \frac{σ}{h} \times 100 %$
wherein, d is a diameter of the reinforcing member (41); D is an outer diameter (40) of the micro-bundle tube (10); δ is a wall thickness of the micro-bundle tube (10); n is number of core of optical fiber (101) in the micro-bundle tube (10); d_{f} is an outer diameter of the optical fiber (101); h is a stranding pitch; σ is a tensile strength of material of the micro-bundle tube (10); 0.6% is an additional stretching window formed by the unidirectional stranding;
the reinforcing layer (20) adopts a spiral stranding with a stranding mode of unidirectional stranding and a stranding pitch of 600mm - 800mm;
a stranding direction of the micro-bundle tube (10) is opposite to a stranding direction of the reinforcing layer (20).

2. The unidirectional stranded micro-bundle optical cable according to claim 1, wherein a material of the reinforcing layer (20) is at least one of aramid, fiberglass yarn, polyester yarn and water-blocking yarn.

3. The unidirectional stranded micro-bundle optical cable according to claim 1, wherein a material of the outer sheath (40) is a polyolefin material;
the polyolefin material comprises a polyethylene material and/or a low smoke zero halogen flame-retardant polyolefin material.

4. The unidirectional stranded micro-bundle optical cable according to claim 1, wherein the micro-bundle tube (10) comprises an optical fiber (101), a second water-blocking yarn (102) and a micro-bundle tube sheath (103);
number of the optical fiber (101) is ≥ 1, and the optical fiber (101) adopts an S-Z stranding;
a dimension of the optical fiber (101) comprises a nominal diameter of 250µm, a nominal diameter of 200µm, or a nominal diameter of 180µm.

5. The unidirectional stranded micro-bundle optical cable according to claim 4, wherein the second water-blocking yarn (102) has a yarn density of ≥ 20000m/kg, a tensile strength of ≥ 15N, an elongation at break of ≥ 15%, a thermal shrinkage rate of ≤ 2.5%, an expansion velocity of ≥ 30ml/g/min, an expansion rate of ≥ 40ml/g, and a moisture content of ≤ 5%.

6. The unidirectional stranded micro-bundle optical cable according to claim 1, wherein the micro-bundle tube (10) comprises an optical fiber (101), a water-blocking fiber ointment (104) and a micro-bundle tube sheath (103);
the water-blocking fiber ointment (104) has a density of ≤ 0.88g/cm³, an oxidative induction time of ≥ 20min, a dropping point of ≥ 200°C, water resistance of not disintegrating for 7 days, a moisture content of ≤ 3%, and a hydrogen evolution amount of ≤ 0.03µl/g.

7. The unidirectional stranded micro-bundle optical cable according to any one of claims 4-6, wherein the micro-bundle tube sheath (103) has a wall thickness of 0.1mm - 0.2mm;
a material of the micro-bundle tube sheath (103) is LSZH, TPEE or a polyolefin material;
the micro-bundle tube sheath (103) has a density of 1.05g/cm³ - 1.55g/cm³, a tensile strength of 12MPa - 18MPa, and an elongation at break of 120% - 550%.

## Patentansprüche

1. Unidirektionales, verseiltes Mikrobündel-Lichtwellenleiterkabel, umfassend Mikrobündelrohre (10), eine Verstärkungsschicht (20), ein wasserabweisendes Band (30) und einen Außenmantel (40);
wobei ein erstes wasserabweisendes Garn (11) zwischen den Mikrobündelrohren (10) angeordnet ist, ein Reißseil (31) in dem wasserabweisenden Band (30) angeordnet ist, und ein Verstärkungselement (41) in dem Außenmantel (40) angeordnet ist;
wobei das Mikrobündelrohr (10) eine spiralförmige Verseilung mit einem Verseilungsmodus von unidirektionaler Verseilung aufweist, **dadurch gekennzeichnet, dass** die spiralförmige Verseilung eine Verseilsteigung von 800 mm - 900 mm aufweist;
wobei die Verseilsteigung des Mikrobündelrohrs (10) größer ist als eine Überlänge für die unidirektionale Verseilung;
wobei die Überlänge für die unidirektionale Verseilung nach der folgenden Formel berechnet wird: ${ε}_{fiber} = \left\{1-\frac{\sqrt{{\left[\left(d+2δ+1.16\times \sqrt{n}\times {d}_{f}\right)\times π\right]}^{2} + {h}^{2}}}{\sqrt{{\left[\left(D+d\right)\times π\right]}^{2} + {h}^{2}}}\right\} \times 100 % + 0.6 % - \frac{σ}{h} \times 100 %$
wobei d der Durchmesser des Verstärkungselements (41) ist; D der Außendurchmesser (40) des Mikrobündelrohrs (10) ist; δ die Wandstärke des Mikrobündelrohrs (10) ist; n die Anzahl der Kerne der optischen Faser (101) in dem Mikrobündelrohr (10) ist; d_{f} der Außendurchmesser der optischen Faser (101) ist; h die Verseilsteigung ist; σ die Zugfestigkeit des Materials des Mikrobündelrohrs (10) ist; 0,6 % ein durch die unidirektionale Verseilung gebildetes zusätzliches Dehnungsfenster ist;
wobei die Verstärkungsschicht (20) eine spiralförmige Verseilung mit einem Verseilungsmodus der unidirektionalen Verseilung und einer Verseilsteigung von 600 mm bis 800 mm aufweist;
wobei die Verseilrichtung des Mikrobündelrohrs (10) entgegengesetzt zur Verseilrichtung der Verstärkungsschicht (20) ist.

2. Unidirektionales, verseiltes Mikrobündel-Lichtwellenleiterkabel nach Anspruch 1, wobei das Material der Verstärkungsschicht (20) mindestens eines der folgenden ist: Aramid, Glasfasergarn, Polyestergarn und wasserabweisendes Garn.

3. Unidirektionales, verseiltes Mikrobündel-Lichtwellenleiterkabel nach Anspruch 1, wobei das Material des Außenmantels (40) ein Polyolefinmaterial ist;
wobei das Polyolefinmaterial ein Polyethylenmaterial und/oder ein raucharmes, halogenfreies, flammwidriges Polyolefinmaterial umfasst.

4. Unidirektionales, verseiltes Mikrobündel-Lichtwellenleiterkabel nach Anspruch 1, wobei das Mikrobündelrohr (10) eine optische Faser (101), ein zweites wasserabweisendes Garn (102) und eine Mikrobündelrohrummantelung (103) umfasst;
wobei die Anzahl der optischen Faser (101) ≥ 1 ist und die optische Faser (101) eine S-Z-Verseilung aufweist;
wobei eine Abmessung der optischen Faser (101) einen Nenndurchmesser von 250 µm, einen Nenndurchmesser von 200 µm oder einen Nenndurchmesser von 180 µm umfasst.

5. Unidirektionales, verseiltes Mikrobündel-Lichtwellenleiterkabel nach Anspruch 4, wobei das zweite wasserabweisende Garn (102) eine Garndichte von ≥ 20.000 m/kg, eine Zugfestigkeit von ≥ 15 N, eine Bruchdehnung von ≥ 15 %, eine thermische Schrumpfungsrate von ≤ 2,5 %, eine Ausdehnungsgeschwindigkeit von ≥ 30 ml/g/min, eine Ausdehnungsrate von ≥ 40 ml/g und einen Feuchtigkeitsgehalt von ≤ 5 % aufweist.

6. Unidirektionales, verseiltes Mikrofaserbündel-Lichtwellenleiterkabel nach Anspruch 1, wobei das Mikrofaserbündelrohr (10) eine optische Faser (101), eine wasserabweisende Fasersalbe (104) und eine Mikrobündelrohrummantelung (103) umfasst;
wobei die wasserabweisende Fasersalbe (104) eine Dichte von ≤ 0,88 g/cm³, eine oxidative Induktionszeit von ≥ 20 min, einen Tropfpunkt von ≥ 200 °C, eine Wasserbeständigkeit, bei der sie 7 Tage lang nicht zerfällt, einen Feuchtigkeitsgehalt von ≤ 3 % und eine Wasserstoffentwicklungsmenge von ≤ 0,03 µl/g aufweist.

7. Unidirektionales, verseiltes Mikrobündel-Lichtwellenleiterkabel nach einem der Ansprüche 4 bis 6, wobei die Mikrobündelrohrummantelung (103) eine Wandstärke von 0,1 mm bis 0,2 mm aufweist;
das Material der Mikrobündelrohrummantelung (103) LSZH, TPEE oder ein Polyolefinmaterial ist;
die Mikrobündelrohrummantelung (103) eine Dichte von 1,05 g/cm³ bis 1,55 g/cm³, eine Zugfestigkeit von 12 MPa bis 18 MPa und eine Bruchdehnung von 120 % bis 550 % aufweist.

## Revendications

1. Câble à fibres optiques micro-groupées à toronnage unidirectionnel, comprenant des tubes micro-groupés (10), une couche de renfort (20), un ruban bloquant l'eau (30) et une gaine extérieure (40) ;
un premier fil bloquant l'eau (11) est disposé entre les tubes micro-groupés (10), un filin de déchirement (31) est disposé dans le ruban bloquant l'eau (30), et un élément de renfort (41) est disposé dans la gaine extérieure (40) ;
le tube micro-groupé (10) adopte un toronnage hélicoïdal selon un mode de toronnage unidirectionnel, **caractérisé en ce que** le toronnage hélicoïdal présente un pas de toronnage de 800 mm à 900 mm ;
le pas de toronnage du tube micro-groupé (10) est supérieur à une longueur excédentaire pour le toronnage unidirectionnel ;
la longueur excédentaire pour le toronnage unidirectionnel est calculée selon la formule suivante : ${ε}_{fibre} = \left\{1-\frac{\sqrt{{\left[\left(d+2δ+1.16\times \sqrt{n}\times {d}_{f}\right)\times π\right]}^{2} + {h}^{2}}}{\sqrt{{\left[\left(D+d\right)\times π\right]}^{2} + {h}^{2}}}\right\} \times 100 % + 0.6 % - \frac{σ}{h} \times 100 %$
dans laquelle d est un diamètre de l'élément de renfort (41) ; D est un diamètre extérieur (40) du tube micro-groupé (10) ; δ est une épaisseur de paroi du tube micro-groupé (10) ; n est le nombre d'âmes de fibre optique (101) dans le tube micro-groupé (10) ; d_{f} est un diamètre extérieur de la fibre optique (101) ; h est un pas de toronnage ; σ est une résistance à la traction du matériau du tube micro-groupé (10) ; 0,6 % est une fenêtre d'allongement supplémentaire formée par le toronnage unidirectionnel ;
la couche de renfort (20) adopte un toronnage hélicoïdal selon un mode de toronnage unidirectionnel et un pas de toronnage de 600 mm à 800 mm ;
un sens de toronnage du tube micro-groupé (10) est opposé à un sens de toronnage de la couche de renfort (20).

2. Câble à fibres optiques micro-groupées à toronnage unidirectionnel selon la revendication 1, dans lequel un matériau de la couche de renfort (20) est au moins l'un parmi l'aramide, le fil de fibre de verre, le fil de polyester et le fil bloquant l'eau.

3. Câble à fibres optiques micro-groupées à toronnage unidirectionnel selon la revendication 1, dans lequel un matériau de la gaine extérieure (40) est un matériau polyoléfinique ;
le matériau polyoléfinique comprend un matériau en polyéthylène et/ou un matériau polyoléfinique ignifuge sans halogène à faible dégagement de fumée.

4. Câble à fibres optiques micro-groupées à toronnage unidirectionnel selon la revendication 1, dans lequel le tube micro-groupé (10) comprend une fibre optique (101), un deuxième fil bloquant l'eau (102) et une gaine de tube micro-groupé (103) ;
le nombre de fibres optiques (101) est ≥ 1, et la fibre optique (101) adopte un toronnage S-Z ;
une dimension de la fibre optique (101) comprend un diamètre nominal de 250 µm, un diamètre nominal de 200 µm, ou un diamètre nominal de 180 µm.

5. Câble à fibres optiques micro-groupées à toronnage unidirectionnel selon la revendication 4, dans lequel le deuxième fil bloquant l'eau (102) présente une densité de fil ≥ 20 000 m/kg, une résistance à la traction ≥ 15 N, un allongement à la rupture ≥ 15 %, un taux de retrait thermique ≤ 2,5 %, une vitesse d'expansion ≥ 30 ml/g/min, un taux d'expansion ≥ 40 ml/g, et une teneur en humidité ≤ 5 %.

6. Câble à fibres optiques micro-groupées à toronnage unidirectionnel selon la revendication 1, dans lequel le tube micro-groupé (10) comprend une fibre optique (101), un gel bloquant l'eau pour fibres (104) et une gaine de tube micro-groupé (103) ;
le gel bloquant l'eau pour fibres (104) présente une densité ≤ 0,88 g/cm³, un temps d'induction oxydative ≥ 20 min, un point de goutte ≥ 200 °C, une résistance à l'eau sans désagrégation pendant 7 jours, une teneur en humidité ≤ 3 %, et un dégagement d'hydrogène ≤ 0,03 µl/g.

7. Câble à fibres optiques micro-groupées à toronnage unidirectionnel selon l'une quelconque des revendications 4 à 6, dans lequel la gaine de tube micro-groupé (103) présente une épaisseur de paroi de 0,1 mm à 0,2 mm ;
un matériau de la gaine de tube micro-groupé (103) est le LSZH, le TPEE ou un matériau polyoléfinique ;
la gaine de tube micro-groupé (103) présente une densité de 1,05 g/cm³ à 1,55 g/cm³, une résistance à la traction de 12 MPa à 18 MPa, et un allongement à la rupture de 120 % à 550 %.
